# EUROPÄISCHE PATENTSCHRIFT

(11) **EP 0 431 082 B1**
(45) Veröffentlichungstag und Bekanntmachung des Hinweises auf die Patenterteilung: **21.09.1994**
(21) Anmeldenummer: 90903151.0
(22) Anmeldetag: 22.02.1990
(51) Int. Cl.: A01K 1/01

(54) **SANITÄRE EINRICHTUNG FÜR KATZEN (KATZENTOILETTE)**
SANITARY DEVICE FOR CATS (CAT LITTER-BOX)
INSTALLATION SANITAIRE (TOILETTES) POUR CHATS

(30) Priorität: 02.06.1989 DE 3918121
(43) Veröffentlichungstag der Anmeldung: 12.06.1991
(73) Patentinhaber: REINARTZ, Johann Otto, D-41844 Wegberg (DE)
(72) Erfinder: REINARTZ, Johann Otto, D-41844 Wegberg (DE)
(86) Internationale Anmeldenummer: DE9000120
(87) Internationale Veröffentlichungsnummer: WO9014759

(56) Entgegenhaltungen:
- EP-A- 209 474
- DE-U- 8 419 845
- DE-U- 8 609 826
- FR-A- 2 403 958
- FR-A- 2 437 467
- US-A- 4 732 111

## Beschreibung

Die Erfindung betrifft eine sanitäre Einrichtung für Katzen mit automatischer Reinigung und Nachfüllung.

Die sich automatisch selbst reinigende und mit Katzenstreu nachfüllende Katzentoilette dient zur hygienischen Verbesserung in der Haustierhaltung.
Geruchsbelästigungen, wie bei den herkömmlichen Katzentoiletten üblich, werden weitestgehend vermieden. Ebenso erübrigt sich die bei den herkömmlichen Katzentoiletten notwendige Reinigung von Hand.

Katzentoiletten sind seit Jahren bekannt und im Handel in einfacher Form erhältlich.
Sie bestehen aus einfachen Plastikwannen, die in der Regel einen schmalen, abnehmbaren Rand haben.
Eine andere Form besteht aus einer einfachen Plastikwanne mit einem durchsichtigen, abnehmbaren Oberteil, das bis auf das Eingangsloch rundum geschlossen ist. Seit einiger Zeit gibt es für die Katzentoilette auswechselbare Plastikeinlagen mit fertig portioniertem Katzenstreu.

Nachteil dieser herkömmlichen, bisher auf dem Markt angebotenen Katzentoiletten ist, daß diese nach Benutzung von Hand gereinigt werden müssen bzw. die auswechselbare Plastikeinlage mit dem benutzten Katzenstreu von Hand entfernt werden muß.
Dieser Vorgang ist sowohl aus hygienischen Gründen als auch wegen dem Sauberkeitsbedürfnis der Katzen nach jeder Benutzung erforderlich.
Ein weiterer Nachteil der herkömmlichen Katzentoiletten ist, daß trotz geruchbindendem Katzenstreu nach der Benutzung unangenehme Gerüche freigesetzt werden.

Eine sich selbstreinigende Katzentoilette zeigt das nicht vorveröffentlichte DE-GM 89 05 314.
Diese Katzentoilette hat jedoch die nachfolgend aufgeführten Nachteile.
Der benutzte Katzenstreu wird mittels eines Transportbandes, auf das zuvor die Katze schon ihre Notdurft verrichtet hat, abgeräumt. Zum einen ist das Transportband, dadurch daß es in sich beweglich ist, ein Nachteil fur die Katze, die stets darauf bedacht ist festen Boden unter den Füssen zu haben, zum anderen bleiben, trotz der Abstreifplatte, Teile der Fäkalien auf dem Transportband zurück und somit ist eine Verminderung der Geruchsbelästigung durch die an der Luft antrocknenden Fäkalienreste nicht gegeben.
Des weiteren schließt das Transportband den Abfallbehälter nicht luftdicht ab, da ein Transportband, bedingt durch die Bewegung, niemals so luftdicht abschließen kann wie ein abgedichteter Deckel.
Ein weiterer Nachteil ist, daß der Katzenstreu, der nach dem Abräumvorgang von oben durch eine Aussparung im Transportband auf den Boden fällt, sich nur auf einer Seite der Katzentoilette befindet und nicht über den gesamten Boden verteilt wird.
Außerdem ist, dadurch daß die Aussparungen der Streukammer nur durch das sich bewegende Transportband verschlossen werden, nicht gewährleistet, daß sich Streu, der körnig bis pulverig ist, auf dem Transportband ablagert und festsetzt und somit nach einer gewissen Zeit eine Bewegung der Rollen unmöglich macht.
Außerdem ist das Transportband nur mit erheblicher Mühe und einem gewissen Kostenaufwand auswechselbar.
Ein weiterer erheblicher Nachteil dieser Katzentoilette ist die Schwingtüre, da die Katze die Türe praktisch mit dem Kopf aufstoßen muß, wobei die Gefahr bestseht, daß sich die Katze hierbei den Kopf zwischen den sich zurück bewegenden Teilen der Schwingtüre einklemmt und nach dieser schlechten Erfahrung wohl nicht bereit sein wird die Katzentoilette nochmals zu betreten, zumal es Katzen gewohnt sind in einem Behälter mit offenem Zugang ihre Notdurft zu verrichten.
Eine weitere Gefahr für die Katze ist, daß es keine Vorrichtung gibt, die das Betreten der Katzentoilette während des Bewegungsvorganges des Transportbandes ausschließt.

Eine weitere Katzentoilette ist bekannt aus dem DE-GM 84 19 845.
Diese Katzentoilette hat im Wesentlichen die gleichen Nachteile wie die zuvor genannte Katzentoilette.
Die Plastikfolie, die auf einem festem Boden aufliegt und auf die die Katze ihr Geschäft verrichtet, wird manuell oder automatisch aufgerollt, wobei durch das Verdunsten des Urines der Katze eine erhebliche Geruchsbelästigung entsteht.
Eine weitere erhebliche Geruchsbelästigung entsteht durch die Lagerung des benutzten, sprich nassen, Streues in einem auswechselbaren Beutel unterhalb einer Auffangvorrichtung für die Exkremente, der jedoch nicht luftdicht abgeschlossen ist.

Auch der in der Auffangvorrichtung abgesonderte Kot ist nicht luftdicht abgeschlossen und muß zudem noch von Hand entfernt werden.

In den letzten Jahren ist in der Bundesrepublik die Zahl der Katzen ständig gestiegen.
Zum einen liegt dies daran, daß auch die Einpersonenhaushalte, deren Zahl in den letzten Jahren stark gestiegen ist, sich eine Katze halten können, zum anderen ist die Tendenz zur Haltung von zwei oder mehr Katzen in einem Haushalt ansteigend.
Der Erfindung liegt die Aufgabe zugrunde, eine Katzentoilette vorzuschlagen, die sowohl dem Hygienebedürfnis von Mensch und Katze als auch der bequemen Entsorgung des benutzten Katzenstreus für den Menschen Rechnung trägt.

Diese Aufgabe wird durch die Merkmale des Anspruchs 1 gelöst. Eine sanitäre Einrichtung für Katzen, die sich nach jeder Benutzung automatisch reinigt und automatisch mit frischem Katzenstreu versorgt geht aus den Ansprüchen 3 mit 7 hervor.
Durch die automatische Reinigung nach jeder Benutzung wird eine Geruchsbelästigung weitestgehends vermieden und es wird sichergestellt, daß die Katze, aus Protest über eine nicht gereinigte Katzentoilette, ihr 'Geschäft' außerhalb der Katzentoilette verrichtet.

Eine Geruchsbelästigung durch benutzten Katzenstreu wird dadurch weitestgehend vermieden, daß der benutzte Katzenstreu sofort nachdem die Katze die Katzentoilette verlassen hat mittels einer automatischen Schiebevorrichtung in einen separat angebrachten, luftdicht schließenden Abfallbehälter, der mit einem auswechselbaren Beutel versehen ist, geschoben wird.

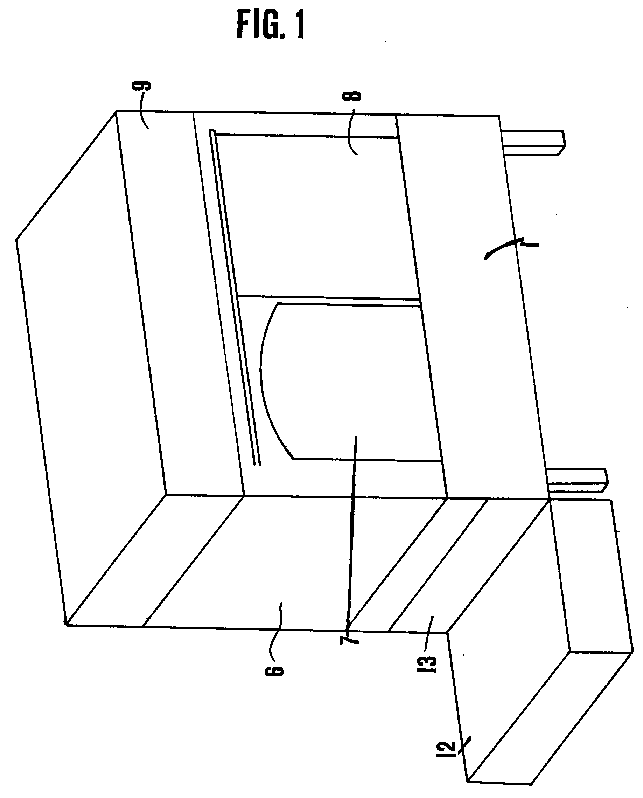

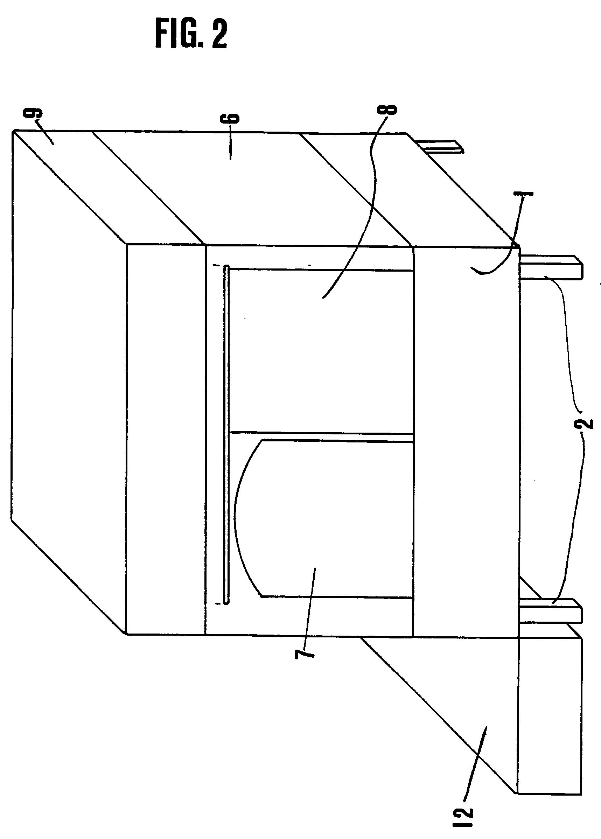

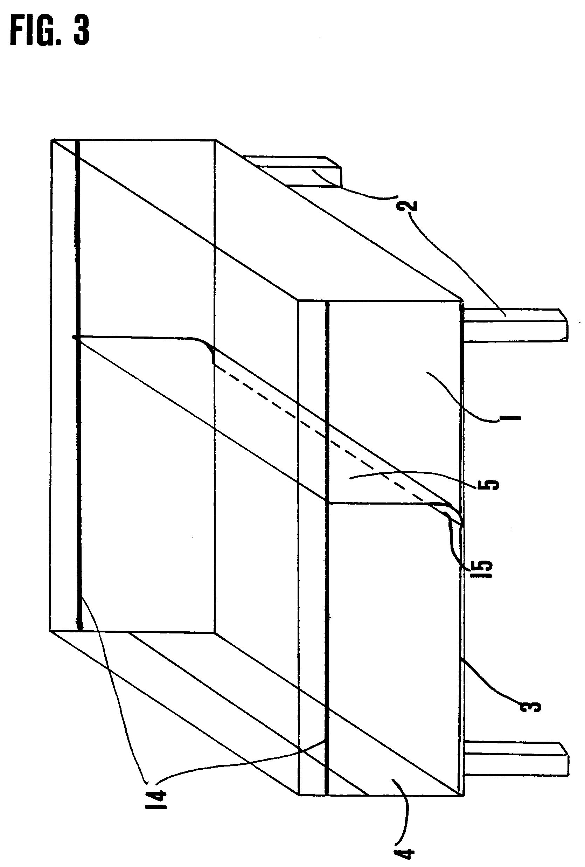

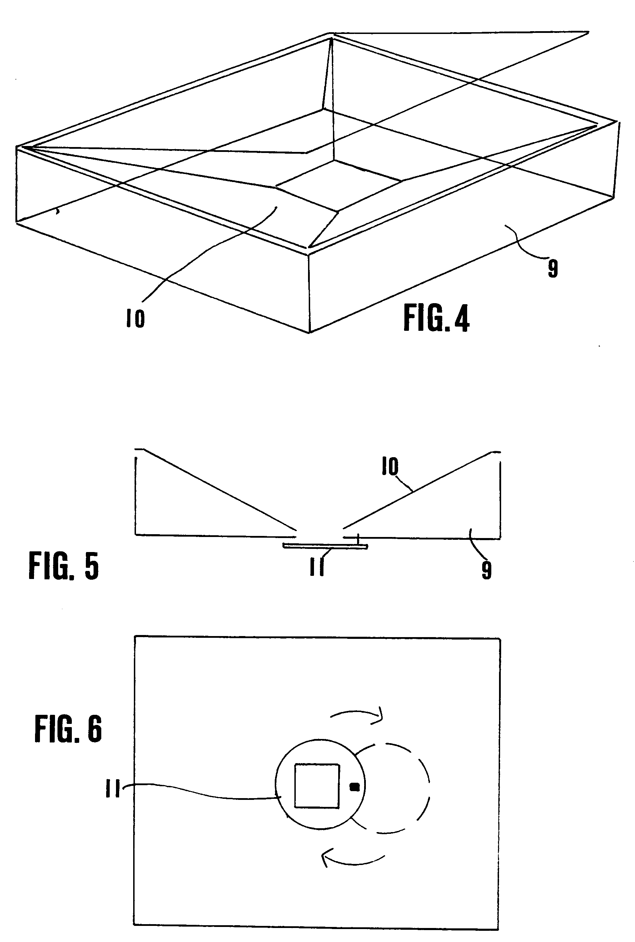

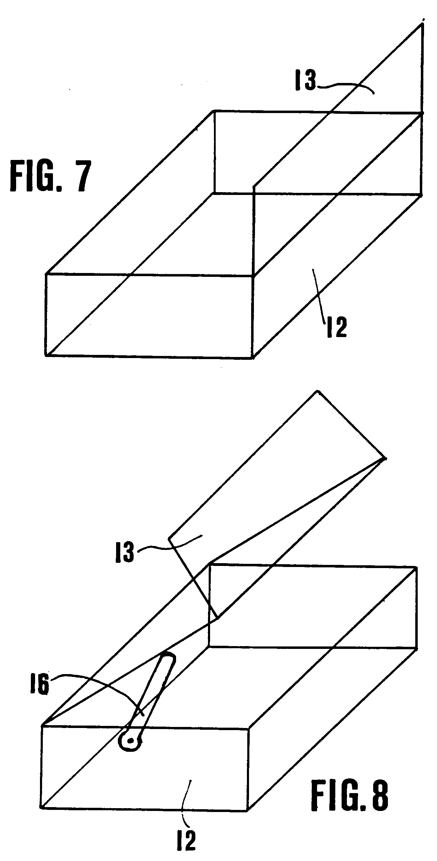

In den Figuren 1-8 ist ein Ausführungsbeispiel dargestellt.

Die Katzentoilette besteht aus 3 sich ineinander setzenden Teilen, einem separaten Abfallbehälter, einem Schieber sowie einer Schiebetüre.

Das rechteckige, wannenförmige Unterteil (1) ist mit einem Untersatz (2), wie Füße o.ä. versehen.
In der linken Schmalseite befindet sich eine über die gesamte Breite gehende Öffnung (4).
Von dieser Seite aus wird der auswechselbare Boden (3), der über den festen Boden geschoben wird, eingelegt.

Der obere Abschluß des Unterteils ist so ausgelegt, daß das Mittelteil (6) daraufgesetzt werden kann.

In diesem Unterteil befindet sich, über Führungen (14) laufend, der in sich leicht gebogene und nach vorne hin abgeflachte Schieber (5), dessen abgeflachtes Teil (15) auswechselbar ist, der den benutzten Katzenstreu über den auswechselbaren Boden (3) von rechts nach links in den dort mit einer Vorrichtung zum Einhängen angebrachten, separaten Abfallbehälter (12), schiebt.

Das Mittelteil (6), das auf das Unterteil (1) aufgesetzt wird, ist nach unten und oben hin offen.
Dieses Mittelteil kann aus einem Stück bestehen, es können aber auch 4 Platten sein, die sich in eine den oberen Abschluß des Unterteils bildende Nut setzen. In der vorderen Längsseite befindet sich ein bogenförmiger Eingang (7), der durch eine Schiebetüre (8) verschlossen werden kann.
Der bogenförmige Eingang ist nicht mittig angelegt sondern nach links verschoben.

Das Oberteil (9) der Katzentoilette ist nach unten hin bis auf eine Öffnung in der Mitte geschlossen, nach oben ist es mit einem Deckel versehen.
Im Inneren des Oberteiles befindet sich ein trichterförmiger Vorratsbehälter (10) für Katzenstreu, der nach unten hin durch eine sich um einen festen Punkt drehende Scheibe (11) verschlossen wird.
Das Oberteil (9) wird auf das Mittelteil (6) aufgesetzt.

Der separate Abfallbehälter (12) ist rundum geschlossen. Den oberen Abschluß bildet ein sich nach links öffnender Deckel.
Auf der rechten Seite des Deckels ist ein nach oben stehendes Teil angebracht (13), das, bei geschlossenem Abfallbehälter, die sich in der linken Schmalseite des Unterteils befindliche Öffnung (4) verschließt, so daß die Katzentoilette, bis auf den Eingang (7), rundum geschlossen ist.
Sowohl der Deckel als auch der Abfallbehälter sind mit einer Dichtung versehen, so daß ein luftdichtes Abschließen gewährleistet ist.
Der Deckel wird durch einen Hebearm (16) vor Beginn des Reinigungsvorganges geöffnet und schließt sich wieder nach Beendigung des Nachfüllvorganges.

Innerhalb der Katzentoilette sind Sensoren installiert, die sowohl das Betreten als auch das Verlassen der Katzentoilette registrieren und, zeitverzögert, den Reinigungs- und Nachfüllvorgang steuern.

Diese Sensoren sind zwischen dem festen und dem auswechselbaren Boden des Unterteils installiert.

Das Betreten der Katzentoilette durch die Katze wird von den zwischen dem festen und dem auswechselbaren Boden des Unterteils installierten Sensoren registriert. Der Reinigungs- sowie Nachfüllvorgang beginnt jedoch erst dann, mit einer Zeitverzögerung, wenn die Katze die Katzentoilette wieder verlassen hat.
Zunächst öffnet sich der Deckel des mit einem auswechselbaren Beutel ausgelegten Abfallbehälters (12) und gibt damit die Öffnung im Unterteil (4) frei.
Das Öffnen des Deckels erfolgt mittels eines Hebearmes (16), der durch einen Getriebekleinstmotor angetrieben wird.
Gleichzeitig mit dem Öffnen des Deckels und mit dem selben Motor angetrieben verschließt die Schiebetüre (8) den Eingang (7) und verhindert somit das Betreten der Katzentoilette während des gesamten Reinigungs- und Nachfüllvorganges.

Ist der Deckel des Abfallbehälters geöffnet und der Eingang durch die Schiebetüre verschlossen, so setzt sich der sich im Unterteil befindliche Schieber (5), der in sich leicht gebogen und nach vorne hin abgeflacht ist und dessen abgeflachtes Teil (15) auswechselbar ist, in Bewegung.
Der Schieber (5), der über eine oder mehrere Führungsschienen (14) läuft und dessen Antrieb über Zahnstangen, die in den Wänden der Längsseite des Unterteils eingelassen sind und Zahnräder durch einen Getriebekleinstmotor erfolgt, schiebt nun den benutzten Katzenstreu von rechts nach links über den auswechselbaren Boden (3) durch die Öffnung (4) im Unterteil in den geöffneten und mit einem auswechselbaren Beutel ausgelegten Abfallbehälter (12).
Nachdem der Schieber den benutzten Katzenstreu in den Abfallbehälter abgeladen hat, bewegt sich der Schieber wieder zurück in seine Ausgangsposition.
Nachdem der Schieber wieder an seiner Ausgangsposition angekommen ist beginnt der Nachfüllvorgang.
Die Öffnung des sich im Oberteil (9) befindlichen trichterförmigen Vorratsbehälters (10), die durch eine sich um einen festen Punkt drehende Scheibe (11) verschlossen ist, wird durch die Drehung der Scheibe freigegeben und eine genau dosierte Menge von dem sich im Vorratsbehälter (10) befindlichen Katzenstreu kann durch die Öffnung auf den aus wechselbaren Boden (3) fallen. Die Scheibe, angetrieben durch einen Getriebekleinstmotor, dreht sich um einen festen Punkt um 360 Grad.

Die Portionierung des Katzenstreues wird dadurch erreicht, daß die Scheibe die Öffnung des Vorratsbehälters nur so lange freigibt wie für die benötigte Menge Katzenstreu erforderlich ist.
Dies erfolgt durch die Drehzahl des einzusetztenden Getriebekleinstmotors.
Der Neigungswinkel des trichterförmigen Vorratsbehälters gewährleistet ein problemloses Nachrutschen des Katzenstreues, so daß stets eine gleichbleibende Menge Katzenstreu in der Katzentoilette vorhanden ist. Dabei ist es bedeutungslos, wenn der Katzenstreu nicht gleichmässig auf dem Boden verteilt wird, da die Katze sich den Streu vor Verrichtung ihres Geschäftes sowie-so dorthin schabt, wo sie ihn benötigt.
Nachdem die Katzentoilette wieder mit frischem Katzenstreu versehen worden ist und somit eine Benutzung wieder möglich ist, schließt sich der Deckel des Abfallbehälters wieder und der Eingang wird durch die Schiebetüre wieder freigegeben.
Erst jetzt ist es der Katze möglich die Katzentoilette erneut zu betreten.

Die gesamten, oben beschriebenen Bewegungsabläufe werden durch 3 Kleinstgetriebemotoren betrieben und durch Sensoren ausgelöst und gesteuert.
Es handelt sich hierbei ausnahmslos um 6 V-Motoren, die von 4 Batterien a 1,5 Volt erbracht wird.

Bei dieser Art von Katzentoilette ist, wie bereits erwähnt, eine Reinigung von Hand nicht mehr erforderlich. Die Teile, die mit dem benutzten Katzenstreu und somit mit den Fäkalien in Berührung kommen, sind leicht und kostengünstig auswechselbar.
Die Auswechselbarkeit des Bodens, auf dem sich der Katzenstreu befindet, empfiehlt sich aus hygienischen Gründen.

Da die Katze sowohl vor als auch nach der Verrichtung ihres Geschäftes den Katzenstreu durch Schaben verteilt bzw. zusammenkratzt, entstehen mit der Zeit auf dem Boden Kratzer, in denen sich dann Teile des verschmutzten Katzenstreues ablagern können, was sowohl die Hygiene als auch die Geruchsverminderung, die durch diese Katzentoilette errreicht werden soll, vermindert.

Die Auswechselbarkeit des vorderen, mit dem verschmutzten Katzenstreues bei jeder Reinigung in Berührung kommenden Teiles des Schiebers empfiehlt sich aus demselben Grund.
Die Auslegung des Abfallbehälters mit einem auswechselbaren Beutel ist genauso selbstverständlich wie dies bei einem normalen Haushaltsmülleimer üblich ist und genau wie bei diesem ist eine Auswechselung desselben, ohne mit dem Inhalt in Berührung kommen zu müssen, mühe- und problemlos möglich.

Der Grundgedanke, der in dieser Erfindung gesehen werden muß, ist der, daß sich diese Katzentoilette selbsttätig reinigt und auch wieder mit frischem Katzenstreu versorgt, so daß eine Reinigung von Hand, wie bei den bisher üblichen Katzentoiletten, nicht mehr notwendig ist.

Gleichwohl hat sich das oben beschriebene Ausführungsbeispiel als gegeben angeboten, da sowohl das Material, hier hat sich Plastik sowohl aus Gründen der Kosten, der Herstellung als auch der Hygiene als besonders zweckmäßig erwiesen, als auch die Bewegungsabläufe so gewählt worden sind, daß sie sowohl dem Menschen als auch der Katze zugute kommen.

## Patentansprüche

1. Sanitäre Einrichtung für Katzen, bestehend aus
einem rechteckigen, mit einem Untersatz (2) versehenen, wannenförmigen Unterteil (1), das zur Aufnahme eines auswechselbaren Bodens (3) ausgelegt ist und das an einer Schmalseite eine über die gesamte Breite gehende Öffnung (4) hat und in dessem Inneren sich ein gebogener und abgeflachter, parallel zur öffnung geführter Schieber (5) zum Schieben des Streus durch die Öffnung (4) befindet;
einem rechteckigen Mittelteil (6), das auf das Unterteil (1) aufsetzbar ist und in das in einer Längsseite einen bogenförmigen Eingang (7) hat, der mit einer Schiebetüre (8) versehen ist;
einem rechteckigen, nach oben hin mit einem Deckel verschlossenen Oberteil (9), in dessem Inneren sich eine trichterförmige Nachfüllvorrichtung (10) für Katzenstreu befindet, die nach unten durch eine drehbare Scheibe (11) verschließbar ist;
einem separaten, zur Aufnahme eines auswechselbaren Beutels ausgelegten Abfallbehälter (12), der an die offene Seite des Unterteils (4) stellbar und einhängbar ist und dessen Deckel an einem Außenrand mit einem nach oben stehenden Teil (13) versehen ist, das so ausgebildet ist, daß bei geschlossenem, am Unterteil (1) angebrachten, Abfallbehälter (12) die Öffnung (4) in der Schmalseite des Unterteils (1) verschlossen ist.

2. Sanitäre Einrichtung für Katzen nach Anspruch 1
dadurch gekennzeichnet,
daß der auswechselbare Boden (3) aus Plastik besteht.

3. Sanitäre Einrichtung für Katzen nach den Ansprüchen 1 und 2
dadurch gekennzeichnet,
daß der Schieber (5) aus Plastik besteht, in sich leicht gebogen und. nach vorne abgeflacht ist, daß dessen abgeflachtes Teil (15) auswechselbar ist und daß der Schieber, angetrieben von einem Getriebekleinstmotor und über zwei seitlich eingelassene Zahnstangen und zwei gelagerte Führungswellen (14) laufend, den benutzten Katzenstreu vor sich herschiebend von rechts nach links bewegbar ist.

4. Sanitäre Einrichtung für Katzen (Katzentoilette) nach den Ansprüchen 1 bis 3
dadurch gekennzeichent,
daß der Abfallbehälter (12) mit einer Aushängevorrichtung versehen ist und aus Plastik besteht und daß dessen Deckel durch einen Hebearm (16), angetrieben durch einen Getriebekleinstmotor, selbsttätig auf- und verschließbar ist.

5. Sanitäre Einrichtung für Katzen (Katzentoilette) nach den Ansprüchen 1 bis 4
dadurch gekennzeichent,
daß die Nachfüllvorrichtung (10) aus Plastik besteht,
und daß deren Verschlußscheibe (11), angetrieben durch einen Getriebekleinstmotor, um einen festen Punkt drehbar ist und dadurch eine Öffnung nach unten freigibt durch die frischer Katzenstreu auf den auswechselbaren Boden (3) fallen kann.

6. Sanitäre Einrichtung für Katzen (Katzentoilette) nach den Ansprüchen 1 bis 5
dadurch gekennzeichnet,
daß Schiebetüre (8) des Eingangs (7) aus Plastik besteht und während des Reinigungs- und Nachfüllvorganges verschließbar ist.

7. Sanitäre Einrichtung für Katzen (Katzentoilette) nach den Ansprüchen 1 bis 6
dadurch gekennzeichnet,
daß sich innerhalb der Katzentoilette Sensoren zur Steuerung des elektronischen Reinigungs- und Nachfüllvorganges befinden.

## Claims

1. Sanitary unit for cats consisting of:
A rectangular, pan-shaped lower part (1) provided with a base (2), which is designed for the mounting of an exchangeable bottom (3) and which has an opening (4) running over the entire width at one of the narrow sides, in the inside of which there is a bent and flattened pusher guided parallel to the opening to push the litter through the opening (4);
a rectangular middle part (6), which can be placed on the lower part (1) and which has an arch-shaped entrance (7) in a lengthwise side, which is provided with a sliding door (8);
a rectangular upper part (9) closed at the top by means of a lid, in the inside of which a funnel-shaped refill device (10) is located for cat litter, which is closeable towards the bottom by means of a rotary plate (11);
a separate trash can (12) designed to hold an exchangeable bag, which is adjustable and suspendable at the open side of the lower part (4) and whose lid is provided with a part (13) on the outer rim (13) that points upward, which is shaped such that, with a closed trash can (12) mounted on the lower part (1), the opening (4) in the narrow side of the lower part (1) is closed.

2. Sanitary unit for cats according to claim 1 characterized by
the fact that the exchangeable bottom is made of plastic.

3. Sanitary unit for cats according to claim 1 and 2 characterized by
the fact that the pusher (5) is made of plastic, slightly bent in itself and flattened towards the front, and that its flattened part (15) is exchangeable and which, driven by a miniature servo-motor and via two laterally recessed gear racks and two bearing-mounted guide shafts (14), is movable from right to left pushing the used cat litter in front of it.

4. Sanitary unit for cats according to claim 1 to 3 characterized by
the fact that the trash can (12) is provided with a suspending device, is separate and made of plastic, and whose lid automatically opens and closes by means of a lifting arm (16) driven by a miniature servo-motor.

5. Sanitary unit for cats according to claim 1 to 4 characterized by
the fact that the filling device (19) is made of plastic, and that its closing plate (11), driven by a miniature servo-motor, is rotatable around a fixed point and thus opens up an opening towards the bottom through which the fresh cat litter can fall onto the exchangeable bottom (3).

6. Sanitary unit for cats according to claim 1 to 5 characterized by
the fact that the sliding door (8) of the entrance (7) is made of plastic and is closeable during the cleaning and refilling procedure.

7. Sanitary unit for cats according to claim 1 to 6 characterized by
the fact that sensors are located within the cat toilet for control of the electronic cleaning and refilling procedure.

## Revendications

1. Equipement sanitaire pour chats, comportant :
Une partie inférieure en forme de cuvette rectangulaire (1), équipée d'un socle (2) et prévue pour recevoir un fond amovible (3) et étant pourvue sur un de ses côtés courts d'une ouverture sur toute la largeur (4), possédant à l'intérieur un poussoir plat, de forme incurvée (5), permettant d'évacuer la litière à travers l'ouverture (4).
Une partie centrale de forme rectangulaire (6), qui peut être posée sur la partie inférieure (1) et dans laquelle est pratiquée sur un des côtés longs une entrée de forme arrondie (7), équipée d'un volet coulissant (8).
Une partie supérieure de forme rectangulaire (9), fermée vers le haut par un couvercle. A l'intérieur de cette partie supérieure se trouve un réservoir de distribution de litière pour chats en forme d'entonnoir (10), qui est fermé vers le bas par un disque rotatif (11).
Un réceptacle à déchets séparé (12), prévu pour recevoir des sacs interchangeables, et qui peut être posé à côté de la toilette pour chats et accroché à l'ouverture (4) de la partie inférieure et dont le couvercle comporte à une de ses extrémités un rebord (13) orienté vers le haut, dont la forme permet, lorsque le réceptacle (12) est fermé et accroché à la partie inférieure (1), de maintenir fermée l'ouverture (4) pratiquée dans le côté court de cette partie inférieure (1).

2. Equipement sanitaire pour chats suivant revendication 1,
caractérisé en ce que le fond amovible est réalisé en matière plastique.

3. Equipement sanitaire pour chats suivant les revendications 1 et 2,
caractérisé en ce que le poussoir (5) est réalisé en matière plastique, de forme légèrement incurvée, dont la partie avant est aplatie et que cette partie aplatie (15) est interchangeable et que ce poussoir (5) peut être déplacé de la gauche vers la droite en poussant ainsi devant lui la litière souillée à l'aide d'un moto-réducteur miniature et par l'intermédiaire de deux crémaillères logées de part et d'autre et de deux tiges de guidage (14) montées sur paliers.

4. Equipement sanitaire pour chats suivant les revendications 1 à 3,
caractérisé en ce que le réceptacle séparé (12) est équipé d'un dispositif d'accrochage et qu'il est réalisé en matière plastique, et que son couvercle est actionné par l'intermédiaire d'un bras (16) à l'aide d'un moto-réducteur miniature qui permet son ouverture et sa fermeture automatique.

5. Equipement sanitaire pour chats suivant les revendications 1 à 4,
caractérisé en ce que le réservoir de distribution (10) est réalisé en matière plastique et que son disque de fermeture (11) tourne autour d'un axe fixe, et qu'il est entraîné par un moto-réducteur miniature et qu'il libère ainsi une ouverture vers le bas et que de la litière pour chats neuve peut tomber à travers cette ouverture sur le fond amovible (3).

6. Equipement sanitaire pour chats suivant les revendications 1 à 5,
caractérisé en ce que le volet coulissant (8) de l'entrée (7) est réalisé en matière plastique et qu'il peut être maintenu fermé pendant l'opération de nettoyage et de distribution de litière.

7. Equipement sanitaire pour chats suivant les revendications 1 à 6,
caractérisé en ce qu'à l'intérieur de cet équipement sanitaire pour chats se trouvent des capteurs permettant la commande électronique de l'opération de nettoyage et de distribution de litière.
